# EUROPÄISCHE PATENTSCHRIFT

(11) **EP 4 445 229 B1**
(45) Veröffentlichungstag und Bekanntmachung des Hinweises auf die Patenterteilung: **12.08.2026**
(21) Anmeldenummer: 22822508.2
(22) Anmeldetag: 28.11.2022
(51) Int. Cl.: G05B 19/042, G05B 19/418

(54) **ADAPTER FÜR EIN FELDGERÄT DER AUTOMATISIERUNGSTECHNIK**
ADAPTER FOR AN AUTOMATION FIELD DEVICE
ADAPTATEUR POUR APPAREIL DE TERRAIN D'AUTOMATISATION

(30) Priorität: 08.12.2021 DE 102021132315
(43) Veröffentlichungstag der Anmeldung: 16.10.2024
(73) Patentinhaber: Endress+Hauser Process Solutions AG, 4153 Reinach (CH)
(72) Erfinder: EIDMANN, Axel, 79541 Lörrach (DE); ULRICH, Michael, 5143 Reinach (CH)
(74) Vertreter: Endress + Hauser Group Services (Deutschland) AG+Co. KG
(86) Internationale Anmeldenummer: PCT/EP2022/083459
(87) Internationale Veröffentlichungsnummer: WO 2023/104570

(56) Entgegenhaltungen:
- EP-B1- 1 854 251
- CN-U- 201 467 170
- DE-A1- 10 251 502

## Beschreibung

Die Erfindung betrifft einen Adapter für ein Feldgerät der Automatisierungstechnik.

Aus dem Stand der Technik sind bereits Feldgeräte bekannt geworden, die in industriellen Anlagen zum Einsatz kommen. In der Prozessautomatisierungstechnik ebenso wie in der Fertigungsautomatisierungstechnik werden vielfach Feldgeräte eingesetzt. Als Feldgeräte werden im Prinzip alle Geräte bezeichnet, die prozessnah eingesetzt werden und die prozessrelevante Informationen liefern oder verarbeiten. So werden Feldgeräte zur Erfassung und/oder Beeinflussung von Prozessgrößen verwendet. Zur Erfassung von Prozessgrößen dienen Messgeräte, bzw. Sensoren. Diese werden beispielsweise zur Druck- und Temperaturmessung, Leitfähigkeitsmessung, Durchflussmessung, pH-Messung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktoren verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind.

Eine Vielzahl solcher Feldgeräte wird von der Endress+Hauser-Gruppe produziert und vertrieben.

In modernen Industrieanlagen sind Feldgeräte in der Regel über Kommunikationsnetzwerke wie beispielsweise Feldbusse (Profibus^{®}, Foundation^{®} Fieldbus, HART^{®}, etc.) mit übergeordneten Einheiten verbunden. Normalerweise handelt es sich bei den übergeordneten Einheiten um Steuereinheiten, wie beispielsweise eine SPS (speicherprogrammierbare Steuerung) oder einen PLC (Programmable Logic Controller). Die übergeordneten Einheiten dienen unter anderem zur Prozesssteuerung, sowie zur Inbetriebnahme der Feldgeräte. Die von den Feldgeräten, insbesondere von Sensoren, erfassten Messwerte werden über das jeweilige Bussystem an eine (oder gegebenenfalls mehrere) übergeordnete Einheit(en) übermittelt, die die Messwerte gegebenenfalls weiterverarbeiten und an den Leitstand der Anlage weiterleiten. Der Leitstand dient zur Prozessvisualisierung, Prozessüberwachung und Prozessteuerung über die übergeordneten Einheiten. Daneben ist auch eine Datenübertragung von der übergeordneten Einheit über das Bussystem an die Feldgeräte erforderlich, insbesondere zur Konfiguration und Parametrierung von Feldgeräten sowie zur Ansteuerung von Aktoren.

Zur Bedienung der Feldgeräte sind entsprechende Bedienprogramme (Bedientools) notwendig, die auf den übergeordneten Einheiten entweder eigenständig ablaufen (Endress+Hauser FieldCare, Pactware, AMS Fisher-Rosemount, PDM Siemens) oder aber auch in Anwendungen des Leitstands (Siemens PCS7, ABB Symphony, Emerson Delta V) integriert sind.

In vielen älteren Anlagen kommunizieren die Feldgeräte mit den übergeordneten Einheiten jedoch häufig noch mittels der 4-20 mA-Technologie. Hierzu sind die Feldgeräte als Zweidraht-Feldgeräte ausgelegt und mittels einer Kommunikationsschleife mit den übergeordneten Einheiten verbunden. Die Größe der von den Feldgeräten ermittelten Prozesswerte wird über variierende, zur aktuellen Größe der Prozesswerte korrespondierende, Stromwerte im Bereich von 4 bis 20 mA an die übergeordneten Einheiten übermittelt. Anschlüsse an die Feldbustypen Foundation Fieldbus und Profibus PA sind nicht vorhanden.

Auch heutzutage ist der Standard für die Feldgerätekommunikation nach wie vor 4-20 mA oder HART. Die Entwicklung, Registrierung und Zulassung von weiteren Kommunikationsschnittstellen, insbesondere für die Standards Foundation Fieldbus und Profibus PA sind für die Feldgerätehersteller sehr aufwendig und teuer. Daher bieten nicht immer alle Feldgerätehersteller für alle Feldgeräteserien die Möglichkeit, ein Feldgerät mit Anschlüssen an die Feldbustypen Foundation Fieldbus und Profibus PA zu erwerben.

Die DE 10 102 51 502 A1 offenbart einen Adapter für ein Feldgerät der Automatisierungstechnik, wobei der darin beschriebene Adapter selbst ein Feldgerät ist. Die Schrift beschreibt, dass die Spannungsversorgung dieses Feldgeräts über eine Stromversorgungseinheit erfolgt, welche über einen Feldbus gespeist werden kann.

Die CN 201 467 170 U offenbart einen Adapter ("Communication Protocol Converter"), welcher Telegramme zwischen einem Profibus-Feldbus und einer HART-Kommunikationsschleife konvertiert. Die Energieversorgung der beteiligten Komponenten wird in dieser Schrift nicht thematisiert.

Die EP 1 854 251 B1 offenbart eine Steuereinrichtung, umfassend eine Feldbusumsetzungseinrichtung, welche ein Funksignal in ein Feldbus-Signal entsprechend einem Feldbusprotokoll umsetzt. Bei der Steuereinrichtung kann es sich um einen HART-Master handeln, d.h., das Funksignal wird in ein HART-Telegramm umgewandelt.

Ausgehend von dieser Problematik liegt der Erfindung die Aufgabe zugrunde, eine Nachrüstmöglichkeit für ein Feldgerät zur Kommunikation mit einem Foundation Fieldbus- oder Profibus PA-Feldbus vorzustellen.

Die Aufgabe wird durch einen Adapter für ein Feldgerät der Automatisierungstechnik gelöst, wobei der Adapter die folgenden Komponenten umfasst:
- eine erste Kommunikationsschnittstelle, welche zum Anschluss an eine mit dem Feldgerät verbundene HART- oder 4-20 mA-Kommunikationsschleife ausgestaltet ist,
- eine zweite Kommunikationsschnittstelle, welche zum Anschluss an einen auf der Manchester Bus Powered-Übertragungstechnik basierenden Foundation Fieldbus- oder Profibus PA-Feldbus ausgestaltet ist;
- zumindest eine Elektronikeinheit mit einer von der Elektronikeinheit ausgeführten Betriebssoftware, wobei die Betriebssoftware dazu ausgestaltet ist, die Elektronikeinheit anzuweisen, von dem Feldgerät ausgesendete und an der ersten Kommunikationsschnittstelle eingehende HART-, bzw. 4-20 mA-Telegramme in Foundation Fieldbus-, bzw. Profibus PA-konforme Telegramme umzuwandeln und über die zweite Kommunikationsschnittstelle auszugeben und/oder an der zweiten Kommunikationsschnittstelle eingehende Foundation Fieldbus-, bzw. Profibus PA-Telegramme in HART-, bzw. 4-20 mA-konforme Telegramme umzuwandeln und über die erste Kommunikationsschnittstelle an das Feldgerät auszugeben, und
- eine Energieversorgungseinheit, welche ausgestaltet ist, über die zweite Kommunikationsschnittstelle elektrische Energie von dem Foundation Fieldbus-, bzw. Profibus-Feldbus abzugreifen und den Adapter mit zu seinem Betrieb benötigten elektrischen Energie zu versorgen,
- wobei der Adapter ausgestaltet ist, elektrische Energie auf die HART-Kommunikationsschleife und an das Feldgerät zu übertragen, um den Messbetrieb des Feldgeräts durchführen zu können.

Der Kern der Erfindung liegt darin, dass ein Adapter vorgesehen ist, der ein Feldgerät mit einem Foundation Fieldbus-, bzw. Profibus PA-Feldbus verbindet. Das Feldgerät selbst weist nur eine Schnittstelle zum Anschluss an eine HART-, bzw. 4-20 mA-Kommunikationsschleife auf. Der Adapter dient als direkte Schnittstelle zwischen der HART-, bzw. 4-20 mA-Kommunikationsschleife und dem Foundation Fieldbus-, bzw. Profibus PA-Feldbus, so dass sich die HART-, bzw. 4-20 mA-Kommunikationsschleife auf einer Seite des Adapters befindet, bzw. mit der ersten Kommunikationsschnittstelle des Adapters verbunden ist, und sich der Foundation Fieldbus-, bzw. Profibus PA-Feldbus auf der anderen Seite des Adapters befindet, bzw. mit der zweiten Kommunikationsschnittstelle des Adapters verbunden ist. Der Adapter führt die Protokollumsetzung zwischen dem Foundation Fieldbus-, bzw. Profibus PA-Feldbus und der HART-, bzw. 4-20 mA-Kommunikationsschleife durch und wird dabei von dem Foundation Fieldbus-, bzw. Profibus PA-Feldbus mit elektrischer Energie versorgt. Der Foundation Fieldbus-, bzw. Profibus PA-Feldbus muss dafür MBP ("Manchester Bus Powered")-basiert sein. Andere Übertragungstechniken, die nicht MBP-basiert sind, sind nicht geeignet. Bei der MBP-Übertragungstechnik werden über dasselbe Kabel Daten und die Energie zur Speisung des Adapters übertragen. Die Leistung kann so begrenzt werden, dass auch ein Einsatz in explosionsgefährlicher Umgebung möglich ist.

Ist die Kommunikationsschleife HART-betrieben, so kann die Kommunikation auf zwei Arten ausgestaltet sein - rein HART-kommunizierend oder eine Kombination von 4-20 mA und HART. Kann der Adapter nur wenig elektrische Energie von dem Feldbus ziehen, so wird das Feldgerät auf eine Adresse höher 1 gesetzt und kommuniziert nur via HART über die Stromschleife. Das Feldgerät benötigt hierbei nur 4 mA. Kann der Adapter genügend Energie ziehen, so wird das Feldgerät auf die Adresse 0 gesetzt und wird in der Kombination 4-20 mA + HART betrieben. Das Feldgerät benötigt hierbei bis zu 22 mA.

Der Adapter ist mit allen Typen von heutzutage erhältlichen Feldgeräten verwendbar, die über eine HART-, bzw. 4-20 mA-Kommunikationsschnittstelle verfügen. Beispiele für solche Feldgeräte, welche im Zusammenhang mit dem erfindungsgemäßen Adapter erwähnt werden, sind bereits im einleitenden Teil der Beschreibung beispielhaft aufgeführt worden.

Gemäß einer vorteilhaften Ausgestaltung des erfindungsgemäßen Adapters ist vorgesehen, dass der Adapter eine dritte Kommunikationsschnittstelle, welche dazu ausgestaltet ist, Telegramme nach dem Bluetooth-Protokoll drahtlos zu empfangen und auszusenden. Über die dritte Kommunikationsschnittstelle ist somit beispielsweise eine externe Bedieneinheit, insbesondere ein mobiles Endgerät, wie bspw. ein Smartphone oder ein Tablet, ein Laptop oder PC, oder eine Bediengerät im Sinne des von der Anmelderin produzierten und vertriebenen Field Xperts verbindbar.

In einer vorteilhaften Ausgestaltung des erfindungsgemäßen Adapters ist vorgesehen, dass der Telegrammumwandler die Elektronikeinheit dazu anweist, von dem Feldgerät ausgesendete und an der ersten Kommunikationsschnittstelle eingehende HART-, bzw. 4-20 mA-Telegramme in Bluetooth-konforme Telegramme umzuwandeln und über die dritte Kommunikationsschnittstelle drahtlos auszugeben und/oder an der dritten Kommunikationsschnittstelle eingehende Bluetooth-Telegramme in HART-, bzw. 4-20 mA-konforme Telegramme umzuwandeln und über die erste Kommunikationsschnittstelle an das Feldgerät auszugeben. Das Feldgerät ist somit beispielsweise per externer Bedieneinheit über den Adapter bedienbar. Es kann vorgesehen sein, Daten per Bedieneinheit auszulesen, wobei ein Bedienbefehl per Bluetooth an die dritte Kommunikationsschnittstelle gesendet wird. Der Adapter sorgt für die Umsetzung in einen HART-Befehl, der an das Feldgerät gesendet wird. Die Antwort des Feldgeräts wird anschließend von dem Adapter über die HART-Kommunikationsschleife empfangen und über die dritte Kommunikationsschnittstelle an die externe Bedieneinheit ausgesendet. Es können auf diese Art und Weise auch Daten in das Feldgerät geschrieben werden, beispielsweise Parameterwerte. Es kann auch vorgesehen sein, dass der Adapter Daten des Feldgeräts (bspw. Daten der Primär- und Sekundärvariablen), welche über den Foundation Fieldbus-, bzw. Profibus PA-Feldbus vom Adapter übermittelt werden, im Adapter in einem Speicher gesichert werden, wobei die externe Bedieneinheit diesen Speicher auslesen kann, ohne dass das Feldgerät noch einmal dafür angefragt werden muss.

Eine vorteilhafte Ausgestaltung des erfindungsgemäßen Adapters sieht vor, dass die Betriebssoftware die Elektronikeinheit dazu anweist, als Master für die HART-, bzw. 4-20 mA-Kommunikationsschleife zu fungieren. Üblicherweise stellen Steuereinheiten oder Bedieneinheiten Master für die Kommunikationsschleife dar. Solche Master können Befehle an das Feldgerät übermitteln, auf welche die Feldgeräte antworten. Beispielsweise können vom Master aktuelle Werte für Prozessvariablen des Feldgeräts abgefragt werden.

Üblicherweise wird ein Feldgerät über die Kommunikationsschleife mit Energie versorgt. Es kann weiterhin vorgesehen sein, dass der Adapter das Feldgerät mit seiner zum Betrieb notwendigen elektrischen Energie versorgt. Der Adapter zweigt daher einen Teil der vom Feldbus abgegriffenen elektrischen Energie ab, um über die erste Kommunikationsschnittstelle die elektrische Energie entsprechend der im 4-20 mA-, bzw. HART-Standard vorgeschriebenen Mindest- und Grenzwerte auf die Kommunikationsschleife zu geben und damit das Feldgerät mit der elektrischen Energie zu versorgen.

Gemäß einer vorteilhaften Ausgestaltung des erfindungsgemäßen Adapters ist vorgesehen, dass die Betriebssoftware die Elektronikeinheit dazu anweist, mittels HART-Kommando "3" Werte von bis zu vier Prozessvariablen des Feldgeräts über die HART-Kommunikationsschleife und/oder den aktuellen Stromwert der HART-, bzw. der 4-20 mA-Kommunikationsschleife auszulesen.

Gemäß einer vorteilhaften Ausgestaltung des erfindungsgemäßen Adapters ist vorgesehen, dass die Betriebssoftware die Elektronikeinheit dazu anweist, mittels HART-Kommando "9" Werte von bis zu acht Prozessvariablen des Feldgeräts, sowie zugehörige Statusinformationen, über die HART-Kommunikationsschleife auszulesen.

Gemäß einer vorteilhaften Ausgestaltung des erfindungsgemäßen Adapters ist vorgesehen, dass die Betriebssoftware die Elektronikeinheit dazu anweist, mittels HART-Kommando "0" Identifikationsinformationen über die HART-Kommunikationsschleife aus dem Feldgerät auszulesen. Dieser Befehl kann beispielsweise dazu verwendet werden, das Feldgerät bei der Inbetriebnahme des Adapters zu identifizieren.

Da es sich bei diesen Befehlen um Standardbefehle handelt, welche fast von jedem Feldgerät verstanden werden, ist auf Seiten des Adapters keine Kenntnis über den Typ des mit dem Adapter verbundenen Feldgeräts notwendig. Jedoch ist es möglich, ein spezielles Feldgerätemodell in den Adapter zu laden, welcher es dem Adapter ermöglicht, Kommandos für spezifische Anfragen an das Feldgerät zu übermitteln.

Eine vorteilhafte Ausgestaltung des erfindungsgemäßen Adapters sieht vor, dass die Betriebssoftware eine Vielzahl von Foundation Fieldbus-, bzw. Profibus PA-Funktionsblöcken aufweist, welche ausgestaltet sind, die Kommunikation über den Foundation Fieldbus-, bzw. Profibus PA-Feldbus zu steuern und die Umwandlung der Telegramme vorzunehmen. Auch hierfür ist keine spezielle Kenntnis über das Feldgerät vonnöten. Es ist insbesondere vorgesehen, ein generisches Feldgerätemodell für die Funktionsblöcke verwendet wird. Es ist aber auch hier möglich, ein spezielles Feldgerätemodell zu verwenden.

Bei den Funktionsblöcken handelt es sich beispielsweise um einen Ressourcenblock (enthaltend adapterbezogene Informationen und Diagnosemöglichkeiten), einen Transducerblock (bietet dem Adapter die Möglichkeit die erste Kommunikationsschnittstelle zu konfigurieren, bspw. um den Kommunikationsschleifenstrom auf 4 mA zu limitieren, eine HART-Adresse zu konfigurieren, und/oder HART-Kommandos entsprechend der HART-Version des Feldgeräts zu wählen) und/oder um einen oder mehrere Al (Analog Input)-Blöcke (repräsentierend jeweils eine Prozessvariable des Feldgeräts).

Gemäß einer vorteilhaften Ausgestaltung des erfindungsgemäßen Adapters ist vorgesehen, dass der Adapter eine oder mehrere weitere Kommunikationsschnittstellen aufweist, welche zum Anschluss an einen weiteren, bzw. weitere Foundation Fieldbus- oder Profibus PA-Feldbusse ausgestaltet sind, wobei die Betriebssoftware die Elektronikeinheit dazu anweist, von dem Feldgerät ausgesendete und an der ersten Kommunikationsschnittstelle eingehende HART-, bzw. 4-20 mA-Telegramme in Foundation Fieldbus-, bzw. Profibus PA-konforme Telegramme umzuwandeln und über die weiteren Kommunikationsschnittstellen auszugeben und/oder an den weiteren Kommunikationsschnittstelle eingehende Foundation Fieldbus-, bzw. Profibus PA-Telegramme in HART-, bzw. 4-20 mA-konforme Telegramme umzuwandeln und über die erste Kommunikationsschnittstelle an das Feldgerät auszugeben. Es ist somit möglich, die Telegramme des Feldgeräts an mehrere Feldbusse zu senden (ausgewählt oder simultan), beziehungsweise von jedem einzelnen Feldbus Befehle entgegenzunehmen und an das Feldgerät zu übermitteln. Für jeden Feldbus sind entsprechende, wie obig beschriebene, Funktionsblöcke vorhanden.

Die Erfindung wird anhand der nachfolgenden Figur näher erläutert. Es zeigt

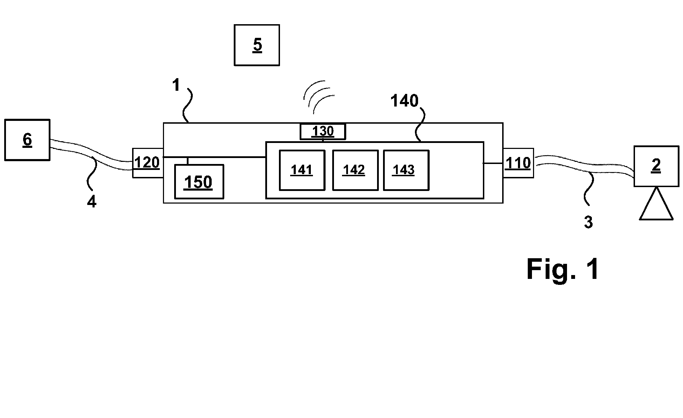

Fig. 1: ein Ausführungsbeispiel des erfindungsgemäßen Adapters.

In Fig. 1 ist ein in einer Messstelle einer verfahrenstechnischen Anlage eingebautes Feldgerät 2 abgebildet. Im vorliegenden Fall handelt es sich bei dem Feldgerät 2 um ein Füllstandsmessgerät, welches zum Erfassen des Füllstands in einem Behälter ausgestaltet ist. Das Feldgerät 2 soll an einen modernen Feldbus 4 angeschlossen werden, weist aber nur eine Schnittstelle zum Anschluss an eine 4-20 mA- oder HART-Kommunikationsschleife 3 auf.

Aus diesem Grund wird das Feldgerät 2 an den erfindungsgemäßen Adapter 3 angeschlossen. In diesem Ausführungsbeispiel wird die Kommunikationsschleife 3, bei welcher es sich im vorliegenden Fall um eine HART-Kommunikationsschleife handelt, an eine erste Kommunikationsschnittstelle 110 des Adapters 1 angeschlossen. Es kann vorgesehen sein, dass der Adapter derart ausgestaltet ist, dass er physisch mit dem Feldgerät 2 verbunden ist. Beispielsweise wird der Adapter 1 per Gewinde in den PG-Anschluss des Feldgeräts 2 geschraubt.

An die zweite Kommunikationsschnittstelle 120 des Adapters wird ein Feldbus, im vorliegenden Beispiel ein Foundation Fieldbus-Feldbus 4 (also ein Feldbus, der entsprechend der Foundation Fieldbus Spezifikation ausgestaltet ist) angeschlossen. Der Foundation Fieldbus-Feldbus 4 ist entsprechend der Manchester Bus Powered (BWP)-Übertragungstechnik eingerichtet. Das bedeutet, dass der Feldbus auf OSI-Layer 1 aus zwei Leitungen besteht, über welche Daten/Telegramme und elektrische Energie gleichermaßen übertragen werden.

Der Adapter weist eine Energieversorgungseinheit 150 auf. Diese ist dazu ausgestaltet, elektrische Energie, die über den Foundation Fieldbus-Feldbus 4 übertragen wird, zu erfassen und den Adapter 1 mit seiner zum Betrieb benötigten elektrischen Energie zu versorgen. Darüber hinaus ist der Adapter 1 erfindungsgemäß ausgestaltet, elektrische Energie auf die HART-Kommunikationsschleife 3 und an das Feldgerät 2 zu übertragen, um den Messbetrieb des Feldgeräts 2 durchführen zu können.

Die Funktionsweise und weitere Komponenten des Adapters 1 werden anhand eines kurzen Funktionsbeispiels beschrieben:
Eine oder mehrere Steuerungseinheiten (bspw. SPSen) sind mit dem Foundation Fieldbus-Feldbus 4 verbunden. Diese sollen in regelmäßigen Zeitabständen die Primärvariable des Feldgeräts 2 erfassen. Zu diesem Zweck sendet die Steuereinheit im Rahmen einer zyklischen Kommunikation ein Bedientelegramm in Richtung Feldgerät 2. Hierbei wird der Steuereinheit jedoch nicht das Feldgerät 2 bekannt gemacht, sondern der Adapter 1, was bedeutet, dass das Bedientelegramm an die Feldbusadresse des Adapters 1 übermittelt wird. Das Bedientelegramm wird von der zweiten Kommunikationsschnittstelle 120 empfangen.

Der Adapter umfasst eine Elektronikeinheit 140 mit einer auf dieser ausgeführten Betriebssoftware, insbesondere eine Firmware, die den Adapter steuert, bzw. seine Betriebsfunktionalitäten ausführt. Die Elektronikeinheit bearbeitet die Anfrage des Bedientelegramms und konvertiert dieses in ein HART-Telegramm, basierend auf dem Inhalt des Bedientelegramms. Im vorliegenden Fall erstellt der Adapter ein Bedientelegramm enthaltend das HART-Bedienkommando "3" und überträgt dieses mittels der HART-Kommunikationsschleife 3. Dieses HART-Bedienkommando weist das Feldgerät dazu an, einen aktuellen Messwert von einer oder mehreren seiner Primärvariablen zu erfassen. Nach dem Erfassen übermittelt das Feldgerät den Messwert oder die Messwerte als Inhalt eines neuen HART-Telegramms über die HART-Kommunikationsschleife 3 an den Adapter 1.

Der Adapter 1 empfängt das von dem Feldgerät ausgesendet HART-Telegramm, analysiert dieses und konvertiert dieses in ein Foundation Fieldbus-konformes Telegramm. Hierfür wird der Messwert der Prozessvariable aus dem HART-Telegramm extrahiert und in einen Al-Funktionsblock 141 im Adapter gespeichert. Mithilfe dieses Funktionsblocks erstellt die Elektronikeinheit 140 das Foundation Fieldbus-konforme Telegramm, welches über den Foundation Fieldbus-Feldbus 4 an die Steuereinheit übermittelt wird.

Für das Konvertieren von Foundation Fieldbus-konformen Telegrammen in HART-konforme Telegramme, und vice versa, wird ein generisches Feldgerätemodell verwendet, welches in der Betriebssoftware implementiert ist. Damit sind die Standardfunktionalitäten des Feldgeräts 2 abgedeckt, beispielsweise das beschriebene Abrufen der Messwerte der Primärvariablen. Das generische Feldgerätemodell erlaubt ein einfaches Mapping von Foundation Fieldbus-Kommandos in HART-Kommandos, und vice versa. Dadurch ist der Adapter 1 mit quasi jedem Typ Feldgerät betreibbar, ohne dass der Adapter 1 speziell konfiguriert werden muss. Es kann jedoch auch ein spezielles Feldgerätemodell auf den Adapter 1 geladen werden, welches das Mappen spezieller, bzw. komplexer Kommandos erlaubt.

Neben dem Al-Funktionsblock 141 weist der Adapter 1 weitere Funktionsblöcke auf, beispielsweise einen Transducerblock 142 und einen Ressourcenblock 143. Der Transducerblock 142 bietet dem Adapter die Möglichkeit die erste Kommunikationsschnittstelle zu konfigurieren, bspw. um den Kommunikationsschleifenstrom auf 4 mA zu limitieren, eine HART-Adresse zu konfigurieren, und/oder HART-Kommandos entsprechend der HART-Version des Feldgeräts zu wählen. Der Resourceblock 143 enthält adapterbezogene Informationen und Diagnosemöglichkeiten.

Des Weiteren weist der Adapter 1 eine dritte Kommunikationsschnittstelle 130 auf. Diese ist zur drahtlosen Kommunikation ausgestaltet und ermöglicht ein drahtloses Bedienen des Feldgeräts 2 mittels einer externen Bedieneinheit 5 per Bluetooth. Bei der externen Bedieneinheit 5 handelt es sich insbesondere ein mobiles Endgerät, wie bspw. ein Smartphone oder ein Tablet, ein Laptop oder PC, oder eine Bediengerät im Sinne des von der Anmelderin produzierten und vertriebenen Field Xperts.

Die von der externen Bedieneinheit 5 ausgesendeten Bedienbefehle werden von der Elektronikeinheit 140, insbesondere unter Verwendung des generischen Feldgerätemodells, in ein HART-Telegramm umgewandelt. Das Feldgerät 3 wird anschließend analog zu oben beschrieben von dem Adapter angefragt und übermittelt seine Antwort. Das HART-Telegramm des Feldgeräts 3 wird anschließend von der Elektronikeinheit 140 in ein Bluetoothformat konvertiert und an die externe Bedieneinheit 5 übermittelt.

Mittels der Steuereinheit (über den Foundation Fieldbus Feldbus 4) und/oder mittels der externen Bedieneinheit 5 können eine Vielzahl verschiedener Bedienungen des Feldgeräts 3 vorgenommen werden. Neben der beschriebenen Messwertabfrage der Primärvariablen umfasst der Begriff des Bedienens auch das Schreiben von Parameterwerten in das Feldgerät 3, das Abrufen von Diagnoseinformationen des Feldgeräts 3, das Abrufen von Identifikationsinformationen des Feldgeräts 3, oder ähnliches.

Es versteht sich von selbst, dass das erfindungsgemäße Verfahren und das erfindungsgemäße System auf jegliche Art und Anzahl von Feldgeräten 2 anwendbar ist und nicht auf das in der Fig. 1 gezeigte Ausführungsbeispiel beschränkt ist. Des Weiteren kann anstatt eines Foundation Fieldbus-Feldbusses auch ein Profibus PA-Feldbus verwendet werden, dessen Eigenschaften sehr ähnlich sind.

### Bezugszeichenliste

- 1: Adapter
- 110: erste Kommunikationsschnittstelle
- 120: zweite Kommunikationsschnittstelle
- 130: dritte Kommunikationsschnittstelle
- 140: Elektronikeinheit
- 141, 142, 143: Funktionsblöcke
- 150: Energieversorgungseinheit
- 2: Feldgerät
- 3: HART- oder 4-20 mA-Kommunikationsschleife
- 4: Foundation Fieldbus- oder Profibus PA-Feldbus
- 5: externe Bedieneinheit

## Patentansprüche

1. Adapter (1) für ein Feldgerät (2) der Automatisierungstechnik, umfassend:
- eine erste Kommunikationsschnittstelle (110), welche zum Anschluss an eine mit dem Feldgerät (2) verbundene HART- oder 4-20 mA-Kommunikationsschleife (3) ausgestaltet ist,
- eine zweite Kommunikationsschnittstelle (120), welche zum Anschluss an einen auf der Manchester Bus Powered-Übertragungstechnik basierenden Foundation Fieldbus- oder Profibus PA-Feldbus (4) ausgestaltet ist;
- zumindest eine Elektronikeinheit (140) mit einer von der Elektronikeinheit (140) ausgeführten Betriebssoftware, wobei die Betriebssoftware dazu ausgestaltet ist, die Elektronikeinheit (140) anzuweisen, von dem Feldgerät (2) ausgesendete und an der ersten Kommunikationsschnittstelle (110) eingehende HART-, bzw. 4-20 mA-Telegramme in Foundation Fieldbus-, bzw. Profibus PA-konforme Telegramme umzuwandeln und über die zweite Kommunikationsschnittstelle (120) auszugeben und/oder an der zweiten Kommunikationsschnittstelle (120) eingehende Foundation Fieldbus-, bzw. Profibus PA-Telegramme in HART-, bzw. 4-20 mA-konforme Telegramme umzuwandeln und über die erste Kommunikationsschnittstelle (110) an das Feldgerät (2) auszugeben, und
- eine Energieversorgungseinheit (150), welche ausgestaltet ist, über die zweite Kommunikationsschnittstelle (120) elektrische Energie von dem Foundation Fieldbus-, bzw. Profibus-Feldbus (4) abzugreifen und den Adapter (1) mit zu seinem Betrieb benötigten elektrischen Energie zu versorgen,
- **dadurch gekennzeichnet, dass** der Adapter (1) ausgestaltet ist, elektrische Energie auf die HART-Kommunikationsschleife (3) und an das Feldgerät (2) zu übertragen, um den Messbetrieb des Feldgeräts (2) durchführen zu können.

2. Adapter nach Anspruch 1, aufweisend eine dritte Kommunikationsschnittstelle (130), welche dazu ausgestaltet ist, Telegramme nach dem Bluetooth-Protokoll drahtlos zu empfangen und auszusenden.

3. Adapter nach Anspruch 2, wobei die Betriebssoftware dazu ausgestaltet ist, die Elektronikeinheit (140) anzuweisen, von dem Feldgerät (2) ausgesendete und an der ersten Kommunikationsschnittstelle (110) eingehende HART-, bzw. 4-20 mA-Telegramme in Bluetooth-konforme Telegramme umzuwandeln und über die dritte Kommunikationsschnittstelle (130) drahtlos auszugeben und/oder an der dritten Kommunikationsschnittstelle (130) eingehende Bluetooth-Telegramme in HART-, bzw. 4-20 mA-konforme Telegramme umzuwandeln und über die erste Kommunikationsschnittstelle (110) an das Feldgerät (2) auszugeben.

4. Adapter nach zumindest einem der vorherigen Ansprüche, wobei die Betriebssoftware dazu ausgestaltet ist, die Elektronikeinheit (140) anzuweisen, als Master für die HART-, bzw. 4-20 mA-Kommunikationsschleife (3) zu fungieren.

5. Adapter nach Anspruch 4, wobei die Betriebssoftware dazu ausgestaltet ist, die Elektronikeinheit (140) anzuweisen, mittels HART-Kommando "3" Werte von bis zu vier Prozessvariablen des Feldgeräts (2) über die HART-Kommunikationsschleife (3) und/oder den aktuellen Stromwert der HART-, bzw. der 4-20 mA-Kommunikationsschleife (3) auszulesen.

6. Adapter nach Anspruch 4 oder 5, wobei die Betriebssoftware dazu ausgestaltet ist, die Elektronikeinheit (140) anzuweisen, mittels HART-Kommando "9" Werte von bis zu acht Prozessvariablen des Feldgeräts (2), sowie zugehörige Statusinformationen, über die HART-Kommunikationsschleife (3) auszulesen.

7. Adapter nach zumindest einem der Ansprüche 4 bis 6, wobei die Betriebssoftware dazu ausgestaltet ist, die Elektronikeinheit (140) anzuweisen, mittels HART-Kommando "0" Identifikationsinformationen über die HART-Kommunikationsschleife (3) aus dem Feldgerät (2) auszulesen.

8. Adapter nach zumindest einem der vorherigen Ansprüche, wobei die Betriebssoftware eine Vielzahl von Foundation Fieldbus-, bzw. Profibus PA-Funktionsblöcken (141, 142, 143) aufweist, welche ausgestaltet sind, die Kommunikation über den Foundation Fieldbus-, bzw. Profibus PA-Feldbus (4) zu steuern und die Umwandlung der Telegramme vorzunehmen.

9. Adapter nach zumindest einem der vorherigen Ansprüche, wobei der Adapter (1) eine oder mehrere weitere Kommunikationsschnittstellen aufweist, welche zum Anschluss an einen weiteren, bzw. weitere Foundation Fieldbus- oder Profibus PA-Feldbusse ausgestaltet sind, wobei die Betriebssoftware dazu ausgestaltet ist, die Elektronikeinheit (140) anzuweisen, von dem Feldgerät (2) ausgesendete und an der ersten Kommunikationsschnittstelle (110) eingehende HART-, bzw. 4-20 mA-Telegramme in Foundation Fieldbus-, bzw. Profibus PA-konforme Telegramme umzuwandeln und über die weiteren Kommunikationsschnittstellen auszugeben und/oder an den weiteren Kommunikationsschnittstelle eingehende Foundation Fieldbus-, bzw. Profibus PA-Telegramme in HART-, bzw. 4-20 mA-konforme Telegramme umzuwandeln und über die erste Kommunikationsschnittstelle (110) an das Feldgerät (2) auszugeben.

## Claims

1. Adapter (1) for a field device (2) of automation technology, comprising:
• a first communication interface (110) configured to be connected to a HART or 4-20 mA communication loop (3) connected to the field device (2),
• a second communication interface (120) configured to be connected to a Foundation Fieldbus or Profibus PA fieldbus (4) based on Manchester Bus Powered transmission technology,
• at least one electronic unit (140) having operating software executed by the electronic unit (140), wherein the operating software is configured to cause the electronic unit (140) to convert
∘ HART or 4-20 mA telegrams transmitted from the field device (2) and received at the first communication interface (110) into Foundation Fieldbus or Profibus PA-compliant telegrams and to output them via the second communication interface (120), and/or
∘ Foundation Fieldbus or Profibus PA telegrams received at the second communication interface (120) into HART or 4-20 mA-compliant telegrams and to output them to the field device (2) via the first communication interface (110), and
• a power supply unit (150) configured to draw electrical energy from the Foundation Fieldbus or Profibus fieldbus (4) via the second communication interface (120) and to supply the adapter (1) with the electrical energy required for its operation,
**characterised in that**
the adapter (1) is configured to supply electrical energy to the HART communication loop (3) and to the field device (2) in order to enable measurement operation of the field device (2).

2. Adapter according to claim 1, comprising a third communication interface (130) configured to wirelessly receive and transmit telegrams according to the Bluetooth protocol.

3. Adapter according to claim 2, wherein the operating software is configured to cause the electronic unit (140) to convert
• HART or 4-20 mA telegrams transmitted from the field device (2) and received at the first communication interface (110) into Bluetooth-compliant telegrams and to output them wirelessly via the third communication interface (130), and/or
• Bluetooth telegrams received at the third communication interface (130) into HART or 4-20 mA-compliant telegrams and to output them to the field device (2) via the first communication interface (110).

4. Adapter according to at least one of the preceding claims, wherein the operating software is configured to cause the electronic unit (140) to function as a master for the HART or 4-20 mA communication loop (3).

5. Adapter according to claim 4, wherein the operating software is configured to cause the electronic unit (140), by means of HART command "3", to read values of up to four process variables of the field device (2) via the HART communication loop (3) and/or the current value of the HART or 4-20 mA communication loop (3).

6. Adapter according to claim 4 or 5, wherein the operating software is configured to cause the electronic unit (140), by means of HART command "9", to read values of up to eight process variables of the field device (2), as well as associated status information, via the HART communication loop (3).

7. Adapter according to at least one of claims 4 to 6, wherein the operating software is configured to cause the electronic unit (140), by means of HART command "0", to read identification information from the field device (2) via the HART communication loop (3).

8. Adapter according to at least one of the preceding claims, wherein the operating software comprises a plurality of Foundation Fieldbus or Profibus PA function blocks (141, 142, 143), which are configured to control communication via the Foundation Fieldbus or Profibus PA fieldbus (4) and to perform the conversion of the telegrams.

9. Adapter according to at least one of the preceding claims, wherein the adapter (1) comprises one or more further communication interfaces configured to be connected to one or more additional Foundation Fieldbus or Profibus PA field buses,
wherein the operating software is configured to cause the electronic unit (140) to
• convert HART or 4-20 mA telegrams transmitted from the field device (2) and received at the first communication interface (110) into Foundation Fieldbus or Profibus PA-compliant telegrams and to output them via the further communication interfaces, and/or
• convert Foundation Fieldbus or Profibus PA telegrams received at the further communication interfaces into HART or 4-20 mA-compliant telegrams and to output them to the field device (2) via the first communication interface (110).

## Revendications

1. Adaptateur (1) pour un appareil de terrain (2) de la technique d'automatisation, comprenant :
• une première interface de communication (110) configurée pour être raccordée à une boucle de communication HART ou 4-20 mA (3) connectée à l'appareil de terrain (2),
• une deuxième interface de communication (120) configurée pour être raccordée à un bus de terrain Foundation Fieldbus ou Profibus PA (4) basé sur une technique de transmission « Manchester Bus Powered »,
• au moins une unité électronique (140) comportant un logiciel d'exploitation exécuté par l'unité électronique (140), ledit logiciel étant configuré pour amener l'unité électronique (140) à :
∘ convertir des télégrammes HART ou 4-20 mA émis par l'appareil de terrain (2) et reçus au niveau de la première interface de communication (110) en télégrammes conformes au Foundation Fieldbus ou au Profibus PA et à les transmettre via la deuxième interface de communication (120), et/ou
∘ convertir des télégrammes Foundation Fieldbus ou Profibus PA reçus au niveau de la deuxième interface de communication (120) en télégrammes conformes HART ou 4-20 mA et à les transmettre à l'appareil de terrain (2) via la première interface de communication (110), et
• une unité d'alimentation (150) configurée pour prélever de l'énergie électrique du bus de terrain Foundation Fieldbus ou Profibus (4) via la deuxième interface de communication (120) et pour alimenter l'adaptateur (1) en énergie électrique nécessaire à son fonctionnement,
**caractérisé en ce que**
l'adaptateur (1) est configuré pour fournir de l'énergie électrique à la boucle de communication HART (3) et à l'appareil de terrain (2), afin de permettre le fonctionnement de mesure de l'appareil de terrain (2).

2. Adaptateur selon la revendication 1, comprenant une troisième interface de communication (130) configurée pour recevoir et émettre sans fil des télégrammes selon le protocole Bluetooth.

3. Adaptateur selon la revendication 2, dans lequel le logiciel d'exploitation est configuré pour amener l'unité électronique (140) à :
• convertir des télégrammes HART ou 4-20 mA émis par l'appareil de terrain (2) et reçus au niveau de la première interface de communication (110) en télégrammes conformes Bluetooth et à les émettre sans fil via la troisième interface de communication (130), et/ou
• convertir des télégrammes Bluetooth reçus au niveau de la troisième interface de communication (130) en télégrammes conformes HART ou 4-20 mA et à les transmettre à l'appareil de terrain (2) via la première interface de communication (110).

4. Adaptateur selon l'une quelconque des revendications précédentes, dans lequel le logiciel d'exploitation est configuré pour amener l'unité électronique (140) à fonctionner comme maître de la boucle de communication HART ou 4-20 mA (3).

5. Adaptateur selon la revendication 4, dans lequel le logiciel d'exploitation est configuré pour amener l'unité électronique (140), au moyen de la commande HART « 3 », à lire des valeurs jusqu'à quatre variables de processus de l'appareil de terrain (2) via la boucle de communication HART (3) et/ou la valeur de courant actuelle de la boucle HART ou 4-20 mA (3).

6. Adaptateur selon la revendication 4 ou 5, dans lequel le logiciel d'exploitation est configuré pour amener l'unité électronique (140), au moyen de la commande HART « 9 », à lire des valeurs jusqu'à huit variables de processus de l'appareil de terrain (2), ainsi que des informations d'état associées, via la boucle de communication HART (3).

7. Adaptateur selon l'une quelconque des revendications 4 à 6, dans lequel le logiciel d'exploitation est configuré pour amener l'unité électronique (140), au moyen de la commande HART « 0 », à lire des informations d'identification depuis l'appareil de terrain (2) via la boucle de communication HART (3).

8. Adaptateur selon l'une quelconque des revendications précédentes, dans lequel le logiciel d'exploitation comprend une pluralité de blocs fonctionnels Foundation Fieldbus ou Profibus PA (141, 142, 143), configurés pour piloter la communication via le bus de terrain Foundation Fieldbus ou Profibus PA (4) et effectuer la conversion des télégrammes.

9. Adaptateur selon l'une quelconque des revendications précédentes, dans lequel l'adaptateur (1) comprend une ou plusieurs interfaces de communication supplémentaires configurées pour être raccordées à un ou plusieurs bus de terrain Foundation Fieldbus ou Profibus PA supplémentaires,
le logiciel d'exploitation étant configuré pour amener l'unité électronique (140) à :
• convertir des télégrammes HART ou 4-20 mA émis par l'appareil de terrain (2) et reçus au niveau de la première interface de communication (110) en télégrammes conformes Foundation Fieldbus ou Profibus PA et à les transmettre via lesdites interfaces de communication supplémentaires, et/ou
• convertir des télégrammes Foundation Fieldbus ou Profibus PA reçus via lesdites interfaces de communication supplémentaires en télégrammes conformes HART ou 4-20 mA et à les transmettre à l'appareil de terrain (2) via la première interface de communication (110).
